# EUROPEAN PATENT APPLICATION

(11) **EP 3 213 642 A1**
(43) Date of publication of application: **06.09.2017**
(21) Application number: 17158354.5
(22) Date of filing: 28.02.2017
(51) Int. Cl.: A23K 50/40

(54) **EDIBLE DOG CHEW WITH CYLINDRICAL INTERIOR AND EDIBLE COATING**

(30) Priority: 04.03.2016 US 201615061173
(71) Applicant: Chen, Deyu, Wenzhou City 325405 (CN); Chen, Xiang, Wenzhou City 325405 (CN)
(72) Inventor: Chen, Deyu, Wenzhou City 325405 (CN); Chen, Xiang, Wenzhou City 325405 (CN)
(74) Representative: Reichert & Lindner Partnerschaft Patentanwälte

(57) **Abstract**

Dog chews with an inner material and an outer coating. The animal-hide materials of the present invention, when used as an inner material, advantageously can increase durability and chew times. A meat-based coating, when used as the outer coating, advantageously can increase taste of the interior material.

## Description

The present invention relates to an edible dog chew.

### BACKGROUND

Many types of edible dog chews are available on the market. These chews often do not last long, are unhealthy or are expensive to manufacture.

One type of dog chew on the market is NO HIDE™ chicken chews manufactured by Earth Animal. These chews include chicken, chicken gelatin, brown rice flour, organic egss and olive oil. The chicken is rolled out and baked with organic eggs and olive oil.

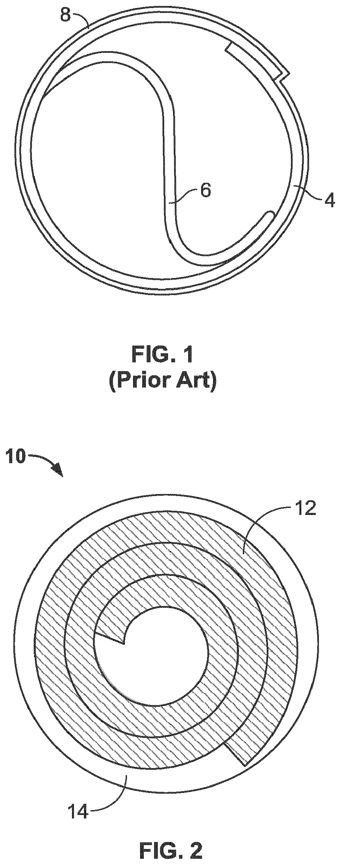

Fig. 1 shows a cross section of the chicken chew. A first chew part 4 of circular cross section is rolled and coated on its outer circumference and at the ends wtth a coating 8. The first chew part 4 surrounds a curled inner chew part 6.

### SUMMARY OF THE INVENTION

The prior art chicken chews are expensive to manufacture, due both to the method and the large amount of chicken. The time for dogs to devour the chew can also be short.

The present invention provides a method for manufacturing an edible dog chew comprising the steps of:
rolling an animal hide into a rolled shape to define a chew interior;
coating the chew interior with a meat-based coating.

The animal hide preferably is rawhide or pork hide.

The length of the chew interior preferably is between 5 and 20 centimeters. and preferably has a diameter of between 1 and 6 centimeters.

Most preferably, the chew interior is made of a single sheet of animal hide having a spiral shaped cross section.

The coating preferably is fresh meat, such as beef, pork, poultry or fish, mixed with glycerin and a starch, such as rice flour to form a syrup. The syrup sticks to the chew interior upon dipping without the need for further ingredients.

The entire pet chew may then be dried in an oven, preferably between 60 to 70 degrees Celcius, until the water percentage is less than 15%, and preferably between 10 and 13%.

The pet chew may then be sterilized in the oven at a temperature of for example between 90 and 100 degrees Celcius and then packed.

The present invention provides a method for manufacturing an edible dog chew comprising the steps of:
rolling an edible sheet into a cylindrical shape to define a chew interior; and
coating the chew interior with a meat-based coating, the meat-based coating including fresh meat and at least one of glycerin and a starch.

The present invention also provides an edible dog chew comprising: an animal-hide material having a cylindrical outer circumference and a lengthwise through opening; and an edible coating coating the outer circumference.

The coating preferably also coats the ends of the edible mixture to close the through openings and enter at least partly into the through openings.

The present invention also provides an edible dog chew comprising: an edible material having a cylindrical outer circumference and a lengthwise through opening; and a coating coating the outer circumference, the coating including fresh meat and glycerin.

The animal-hide materials of the present invention, when used, advantageously can increase durability and chew times. The meat-based coating, when used, advantageously can increase taste of the interior material. The coating with glycerin and/or starch can advantageously allow for good adhesion to the interior and advantageously allow for dipping as a coating method.

### BRIEF DESCRIPTION OF THE DRAWINGS

Fig. 1 shows a prior art dog chew described above.

One embodiment of a dog chew according to the present invention is described in detail below based on the following drawings in which:
Fig. 2 shows a cross section of the embodiment;
Fig. 3 shows a perspective view of the embodiment of Fig. 2.

### DETAILED DESCRIPTION

Fig. 2 shows a cross section of one embodiment of the dog chew 10 according to the present invention, having a chew interior 12 and a coating 14 coating the chew interior 12.

Chew interior 12 is formed by rolling an animal hide sheet, such as rawhide from cattle or porkhide, which is malleable, for example due to soaking in water. The sheet can then be dried to form a chew interior 12.

The chew interior 12 is then coated by dipping the chew interior 12 in an edible mixture 40, so that a coating 14 sticks to the chew interior 12. A portion of the coating 14 may enter into at least one through opening at the ends of the chew interior 12, and help seal any crease or opening at the outer circumference of the chew interior 12. The entire pet chew may then be baked in an oven, and afterwards sterilized in the oven and then packed.

The edible mixture preferably is a syrup made with beef, pork, duck, chicken or fish (85 to 88% by weight of syrup) and glycerin (5 to 7% by weight) and rice flour (5 to 8% by weight).

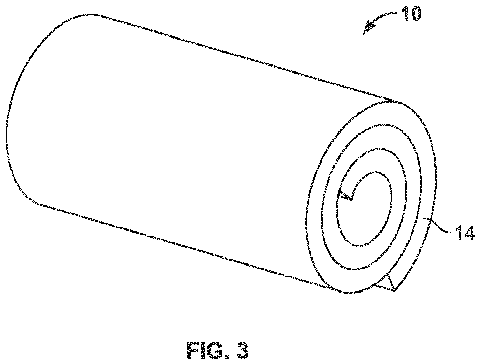

Fig. 3 shows a perspective view of the embodiment of Fig. 2, with an end of the pet chew shown coated by coating 14.

A detailed example of one embodiment is described below:

### EXAMPLE 1:

Roll animal hide sheet into a circular roll;
Dry in oven and baked at 60 to 70 degrees Celcius until the water percentage is less than 25%
Form a syrup with beef, pork, chicken or fish (85 to 88% by weight of syrup) and glycerin (5 to 7% by weight) and rice flour (5 to 8% by weight)
Dry the whole product in the oven at 60 to 70 degrees Celcius until the water percentage is 10 to 13%
Sterilize the whole product in the oven at 90 to 100 degrees Celcius and pack

The outer coating can be for example 8 to 15 percent of the total weight and the inner chew material 85 to 92% of the total weight of the final product.

## Claims

1. A method for manufacturing an edible dog chew comprising the steps of:
rolling an animal hide into a rolled shape to define a chew interior;
coating the chew interior with a meat-based coating.

2. The method as recited in claim 1, wherein the animal hide is rawhide or pork hide.

3. The method as recited in claim 1, wherein the length of the chew interior is between 5 and 20 centimeters and has a diameter of between 1 and 6 centimeters.

4. The method as recited in claim 1, wherein the chew interior is made of a single sheet of animal hide having a spiral shaped cross section.

5. The method as recited in claim 1, wherein the coating includes fresh meat, glycerin and a starch.

6. The method as recited in claim 5, wherein the fresh meat, glycerin and starch is mixed to form a syrup and the coating includes dipping the chew interior in the syrup.

7. The method as recited in claim 6, wherein the syrup includes beef, pork, duck, chicken or fish at 85 to 88% by weight of the syrup, glycerin at 5 to 7% by weight of the syrup, and rice flour at 5 to 8% by weight of the syrup.

8. The method as recited in claim 1 further comprising dried the coated chew interior in an oven.

9. The method as recited in claim 7, wherein the oven operates between 60 to 70 degrees Celcius, and the coated chew interior is dried until the water percentage is less than 15%.

10. A method for manufacturing an edible dog chew comprising the steps of:
rolling an edible sheet into a cylindrical shape to define a chew interior; and
coating the chew interior with a meat-based coating, the meat-based coating including fresh meat and at least one of glycerin and a starch.

11. The method as recited in claim 10, wherein the coating includes the fresh meat, the glycerin and the starch.

12. The method as recited in claim 11, wherein the fresh meat, glycerin and starch is mixed to form a syrup and the coating includes dipping the chew interior in the syrup.

13. The method as recited in claim 12, wherein the syrup includes beef, pork, duck, chicken or fish at 85 to 88% by weight of the syrup, glycerin at 5 to 7% by weight of the syrup, and rice flour at 5 to 8% by weight of the syrup.

14. The method as recited in claim 11, wherein the fresh meat includes beef, pork, duck, chicken or fish at 85 to 88% by weight of the coating, and/or the coating includes glycerin at 5 to 7% by weight, and/or the coating includes rice flour at 5 to 8% by weight.

15. An edible dog chew comprising: an animal-hide material having a cylindrical outer circumference and a lengthwise through opening; and an edible coating coating the outer circumference.
